# FASCICULE DE BREVET EUROPEEN

(11) **EP 3 849 847 B1**
(45) Date de publication et mention de la délivrance du brevet: **03.12.2025**
(21) Numéro de dépôt: 19774146.5
(22) Date de dépôt: 28.08.2019
(51) Int. Cl.: B60R 19/12

(54) **DEFLECTEUR DE PARE-CHOCS AVANT AMELIORANT LA RECIRCULATION D'AIR VERS L'ECHANGEUR DE CHALEUR**
UMLENKBLECH FÜR FRONTSTOSSFÄNGER ZUR VERBESSERUNG DER RÜCKFÜHRUNG VON LUFT ZUM WÄRMETAUSCHER
BAFFLE FOR FRONT BUMPER THAT IMPROVES THE RECIRCULATION OF AIR TO THE HEAT EXCHANGER

(30) Priorité: 10.09.2018 FR 1858097
(43) Date de publication de la demande: 21.07.2021
(73) Titulaire: Stellantis Auto SAS, 78300 Poissy (FR)
(72) Inventeur: GOUHINEC, Jean Paul, 78000 Versailles (FR); BOUDAN, Julien, 91210 Draveil (FR)
(74) Mandataire: BCIP
(86) Numéro de dépôt international: PCT/FR2019/051977
(87) Numéro de publication internationale: WO 2020/053498

(56) Documents cités:
- WO-A1-2013/060953
- DE-A1- 102015 122 093
- DE-B3- 102016 204 724
- JP-A- 2005 138 690
- JP-A- 2012 144 125
- JP-A- 2014 111 399
- JP-A- 2014 111 400
- US-A1- 2015 136 512
- US-A1- 2018 154 764

## Description

L'invention a trait au domaine des véhicules automobiles, plus particulièrement aux systèmes de refroidissement d'un véhicule automobile.

Le moteur thermique d'un véhicule automobile nécessite d'être refroidit par un échangeur de chaleur, cet échangeur étant généralement positionné au niveau de la façade avant du véhicule. À l'avant de la façade avant est monté un pare-chocs avant, depuis lequel s'étend un déflecteur jusque sous ladite façade. Il est également connu d'ajouter des cloisons d'obstruction entre la façade avant et le déflecteur. Le déflecteur et les cloisons d'obturation ont vocation à améliorer la recirculation de l'air en direction de l'échangeur de chaleur.

JP 2005 138690 divulgue un véhicule automobile selon le préambule de la revendication 1.

Le document de brevet publié JP 2014-65322 A divulgue une structure avant de véhicule automobile, la structure comprenant un élément absorbeur de chocs s'étendant depuis un pare-chocs avant vers la façade avant du véhicule. Sur cet élément absorbeur de chocs est positionné un déflecteur qui permet la déviation de l'air vers l'échangeur de chaleur. Deux modes de réalisations sont décrits dans ce document. Dans le premier mode, une paroi terminée par une lèvre d'étanchéité s'étend depuis le déflecteur vers une partie inférieure de l'échangeur de chaleur. La lèvre d'étanchéité est réalisée dans un matériau souple pour compenser des dispersions dimensionnelles et éviter une génération de bruit dû aux vibrations intrinsèques causées par le roulage du véhicule. Dans le deuxième mode de réalisation décrit, la lèvre est remplacée par un joint souple. Ainsi, ces deux modes de réalisation empêchent le passage de l'air au travers de l'espace situé entre le déflecteur et l'échangeur de chaleur en assurant un contact avec le bas de la façade avant. Ces solutions sont cependant complexes et coûteuses à réaliser, de par notamment l'utilisation de différents matériaux et la précision de fabrication et de montage requises.

L'invention a pour objectif de pallier au moins un des inconvénients de l'état de la technique susmentionné. Plus particulièrement, l'invention a pour objectif d'améliorer la recirculation de l'air vers l'échangeur de chaleur, de manière simplifiée et moins coûteuse.

L'invention a pour objet un véhicule automobile comprenant : une façade avant avec un échangeur de chaleur ; un pare-chocs avant ; et un déflecteur de pare-chocs avant, avec une paroi s'étendant depuis un bord inférieur du pare-chocs avant jusque sous, et à distance de la façade avant, formant un passage entre ladite paroi et ladite façade ; et une cloison d'obstruction, configurée pour obstruer le passage ; remarquable en ce que la cloison d'obstruction s'étend depuis la paroi du déflecteur de pare-chocs avant vers la façade avant jusqu'à un bord libre de ladite cloison situé à distance de ladite façade.

Selon un mode avantageux de l'invention, le bord libre de la cloison d'obstruction est à une distance de la façade supérieure à 10mm et/ou inférieure à 40mm.

Selon un mode avantageux de l'invention, la cloison d'obstruction, y compris le bord libre, est en matériau plastique rigide par rapport à un matériau élastomère.

Selon l'invention, la façade avant comprend une face inférieure en vis-à-vis de la paroi du déflecteur de pare-chocs avant, ladite face comprenant au moins une nervure transversale s'étendant le long du bord libre de la cloison d'obstruction.

Selon un mode avantageux de l'invention, la cloison d'obstruction s'étend verticalement depuis la paroi du déflecteur de pare-chocs avant.

Selon un mode avantageux de l'invention, la paroi du déflecteur de pare-chocs avant présente un profil longitudinal avec une partie en U renversé formant une portion de paroi supérieure et deux portions de paroi latérales, la cloison d'obstruction s'étendant depuis la portion de paroi supérieure.

Selon un mode avantageux de l'invention, la cloison d'obstruction s'étend depuis un bord avant de la paroi du déflecteur de pare-chocs avant.

Selon un mode avantageux de l'invention, la cloison d'obstruction est fixée à la paroi du déflecteur de pare-chocs avant au niveau d'une fixation de ladite paroi au bord inférieur dudit pare-chocs.

Selon un mode avantageux de l'invention, la cloison d'obstruction présente un profil en équerre par une première portion de cloison majoritairement verticale adjacente au bord avant de la paroi du déflecteur de pare-chocs avant et une deuxième portion de cloison majoritairement horizontale et formant le bord libre.

Selon un mode avantageux de l'invention, le bord libre de la cloison d'obstruction est adjacent à un bord inférieur et avant de la façade avant.

Avantageusement, la cloison d'obstruction et le déflecteur sont fabriqués d'un seul tenant.

Les mesures de l'invention sont intéressantes en ce qu'elles permettent la production d'un système moins coûteux et moins complexe que ceux décrits dans l'art antérieur. Plus spécifiquement, le fait de prévoir une distance contrôlée entre le bord libre de la cloison d'obstruction et la façade avant permet l'utilisation de matériaux plus rigides et donc moins coûteux, tout en évitant des bruits de battement de la cloison contre la façade avant lors du roulage du véhicule. La distance entre le bord libre de la cloison et la façade avant est avantageusement choisie de manière à optimiser deux contraintes contradictoires, à savoir l'obstruction du passage d'air sous la façade avant et l'absence de battement de la cloison contre ladite façade. La configuration verticale de la cloison d'obstruction procure une construction particulièrement simple. La configuration en équerre de la cloison d'obstruction s'étendant depuis un bord avant de la paroi du déflecteur est avantageuse en ce que la cloison d'obstruction est fixée à une zone plus rigide du déflecteur, notamment de par la proximité du pare-chocs avant.

D'autres caractéristiques et avantages de la présente invention seront mieux compris à l'aide de la description et des dessins parmi lesquels :
- La figure 1 est une vue en perspective d'un véhicule automobile selon l'invention ;
- La figure 2 est une vue en coupe au niveau d'une façade avant du véhicule automobile selon un premier mode de réalisation de l'invention ;
- La figure 3 est une vue en coupe au niveau de la façade avant du véhicule automobile, selon un deuxième mode de réalisation de l'invention.

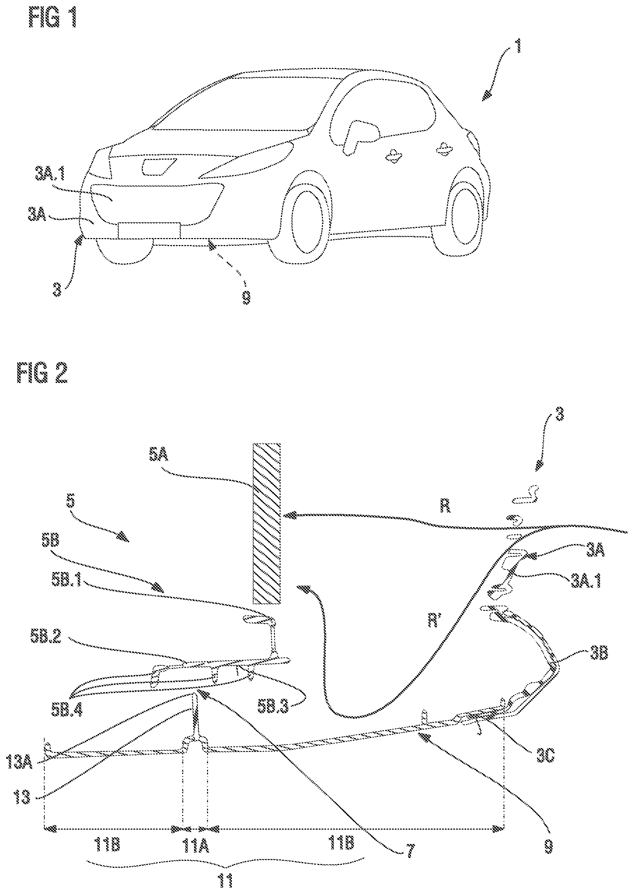

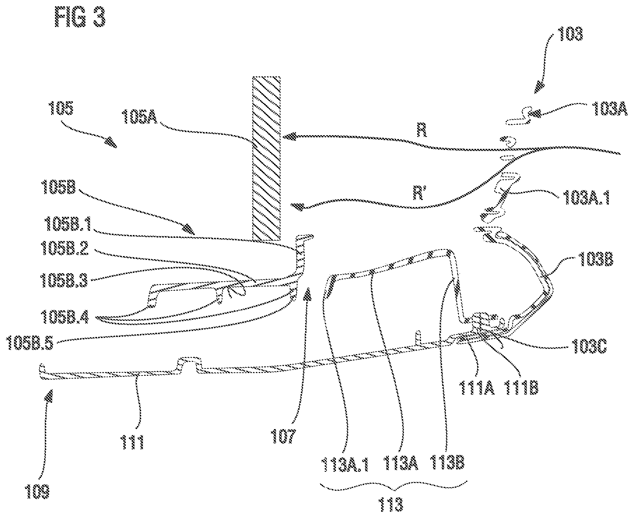

La figure 1 est une vue en perspective d'un véhicule automobile selon l'invention. Le véhicule automobile 1 comprend généralement au moins un pare-chocs avant 3 servant à protéger un groupe motopropulseur (non visible sur ces figures) du véhicule 1. Sur cette figure, on peut en particulier voir un bouclier 3A du pare-chocs 3 qui protège le véhicule 1 et en améliore l'esthétisme. Au milieu du bouclier 3A se trouve une grille d'aération 3A.1, qui permet de faire rentrer l'air ambiant et de le mettre en contact avec un échangeur de chaleur (visible aux figures 2 et 3) du groupe motopropulseur. Cet échangeur est apte à maintenir la température au sein du groupe motopropulseur. Il peut également s'agir d'un échangeur de chaleur d'un système de climatisation et/ou d'un échangeur de chaleur d'air de suralimentation du moteur à combustion. Un déflecteur 9 de pare-chocs avant 3 est également positionné en dessous du véhicule 1, et sert à notamment rediriger l'air en question vers l'échangeur de chaleur (visible aux figures 2 et 3).

La figure 2 montre une vue en coupe du véhicule automobile au niveau du pare-chocs avant, selon un premier mode de réalisation de l'invention.

Le pare-chocs avant 3 comprend le bouclier 3A, pourvu en l'occurrence d'un renfort inférieur 3B. Ce bouclier 3A comprend, dans une partie supérieure, la grille d'aération 3A.1, positionnée parallèlement et à l'avant de l'échangeur de chaleur 5A. Cet échangeur 5A est monté sur une façade avant 5, elle-même située à l'avant du groupe motopropulseur (non visible sur ces figures). La façade avant 5 comprend également, en dessous de l'échangeur de chaleur 5A, une partie inférieure 5B constituée par un corps vertical 5B.1 et un corps horizontal 5B.2. Le corps vertical 5B.1 s'étend depuis l'échangeur de chaleur 5A vers le déflecteur 9, et le corps horizontal 5B.2 s'étend depuis une extrémité inférieure du corps vertical 5B.1 vers l'arrière du véhicule. De plus, le corps horizontal 5B.2 présente une face inférieure 5B.3, ladite face 5B.3 comprenant au moins une nervure transversale 5B.4. Préférentiellement, la face inférieure 5B.3 du corps horizontal 5B.2 présente trois nervures transversales 5B.4 qui s'étendent en direction du déflecteur 9.

Ce déflecteur 9 est constitué par une paroi 11 qui s'étend depuis un bord inférieur 3C du pare-chocs 3 jusque sous et à distance de la façade avant 5. Ainsi, un passage 7 est formé entre la façade avant 5 et le déflecteur 9. Une cloison d'obstruction 13 est prévue pour obstruer le passage 7, cette cloison 13 présentant un bord libre 13A situé à distance de la façade avant 5. Plus spécifiquement, le bord libre 13A de la cloison d'obstruction 13 est à une distance de la façade 5 supérieure à 10mm et/ou inférieure à 40mm. Ainsi, la face inférieure 5B.3 de la façade avant 5 est en vis-à-vis de la paroi 11 du déflecteur 9. Avantageusement, l'une des nervures transversale 5B.4 s'étend le long du bord libre 13A de la cloison d'obstruction 13.

Spécifiquement au premier mode de réalisation de l'invention, la paroi 11 du déflecteur 9 présente un profil longitudinal avec une partie en U renversée 11A formant une portion de paroi supérieure 11A, et deux portions de parois latérales 11B à la portion de paroi supérieure 11A. La portion de paroi supérieure 11A est préférentiellement située en dessous de la façade avant 5. Ainsi, la cloison d'obstruction 13, qui s'étend verticalement depuis la paroi 11 du déflecteur 9 vers la façade avant 5, s'étend préférentiellement depuis la portion de paroi supérieure 11A.

Avantageusement, un flux d'air R entre par la grille d'aération 3A.1 et arrive au niveau de l'échangeur de chaleur 5A. Un second flux d'air R', moins important, se dirige vers le bas et est dévié par le déflecteur 9. En revanche, la cloison d'obstruction 13 qui obstrue le passage 7 entre la partie inférieure 5B de la façade avant 5 et le déflecteur 9, permet le détournement de la majorité du second flux d'air R' vers l'échangeur de chaleur 5A. La présence des nervures transversales 5B.4 améliore également la réorientation du flux d'air R'. Ce mode de réalisation permet de diminuer les coûts de production, essentiellement en ce que la cloison d'obstruction 13 présente une forme simple et peut être réalisée en un matériau rigide, identique à celui de la paroi 11 du déflecteur 9, ou du moins un matériau du même type.

La figure 3 est une vue en coupe de l'avant du véhicule automobile au niveau du pare-chocs avant, selon un deuxième mode de réalisation de l'invention. Cette figure reprend la numérotation des figures 1 et 2 pour les éléments identiques ou similaires, la numération étant toutefois incrémentée de 100. Il est par ailleurs fait référence à la description de ces éléments en relation avec le premier mode de réalisation. Des numéros spécifiques compris entre 100 et 200 sont utilisés pour les éléments spécifiques à ce mode de réalisation.

Dans ce mode de réalisation, le déflecteur 109 comprend, au niveau de sa paroi 111, un bord avant 111A à partir duquel s'étend la cloison d'obstruction 113. Une fixation 111B, positionnée sur le bord avant 111A, permet de fixer la cloison d'obstruction 113 à la paroi 111. De plus, la cloison d'obstruction 113 présente un profil en équerre, formé par une première portion de cloison majoritairement verticale 113B et par une deuxième portion de cloison majoritairement horizontale 113A. La première portion 113B est adjacente au bord avant 111A de la paroi 111 du déflecteur 109, la deuxième portion 113A formant, dans son extrémité postérieure, un bord libre 113A.1. Ce bord libre 113A.1 est adjacent à un bord inférieur et avant 105B.5 de la façade avant 105.

Avantageusement, le flux d'air R entre par la grille d'aération 103A.1 et arrive au niveau de l'échangeur de chaleur 105A. Le second flux d'air R' se dirige vers le bas et est dévié par la cloison d'obstruction 113, qui limite également la taille du passage 107 entre le bord inférieur et avant 105B.5 de la façade avant 105 et le déflecteur 109. Cette cloison 113 permet le détournement de la majorité du second flux d'air R' vers l'échangeur de chaleur 105A.

Similairement au premier mode de réalisation, ce mode de réalisation permet de diminuer les coûts de production, essentiellement en ce que la cloison d'obstruction 113 peut-être réalisée en un matériau rigide, identique à celui de la paroi 111 du déflecteur 109, ou du moins un matériau du même type. Il présente également l'avantage que la cloison 113 est fixée à une zone potentiellement plus rigide du déflecteur 109, en raison de la fixation du bord avant 111A de ladite paroi 111 au bouclier 103A de pare-chocs 103.

De manière générale, la cloison d'obstruction (13 ; 113) est en matériau plastique rigide par rapport à un matériau élastomère. La distance entre le bord libre (13A ; 113A.1) de la cloison (13 ; 113) et la façade avant (5 ; 105) évite des bruits de battement tout en assurant une obstruction suffisante du passage d'air (7 ; 107) sous ladite façade (5 ; 105).

## Revendications

1. Véhicule automobile (1) comprenant :
- une façade avant (5 ; 105) avec un échangeur de chaleur (5A ; 105A) ;
- un pare-chocs avant (3 ; 103) ; et
- un déflecteur (9 ; 109) de pare-chocs avant (3 ; 103), avec une paroi (11 ; 111) s'étendant depuis un bord inférieur (3C ; 103C) du pare-chocs avant (3 ; 103) jusque sous, et à distance de la façade avant (5 ; 105), formant un passage (7 ; 107) entre ladite paroi (11 ; 111) et ladite façade (5 ; 105) ; et
- une cloison d'obstruction (13 ; 113), configurée pour obstruer le passage (7 ; 107) ;
la cloison d'obstruction (13 ; 113) s'étendant depuis la paroi (11 ; 111) du déflecteur (9 ; 109) de pare-chocs avant (3 ; 103) vers la façade avant (5 ; 105) jusqu'à un bord libre (13A ; 113A.1) de ladite cloison (13 ; 113) situé à distance de ladite façade (5 ; 105), **caractérisé en ce que** la façade avant (5 ; 105) comprend une face inférieure (5B.3 ; 105B.3) en vis-à-vis de la paroi (11 ; 111) du déflecteur (9 ; 109) de pare-chocs avant (3 ; 103), ladite face (5B.3 ; 105B.3) comprenant au moins une nervure transversale (5B.4 ; 105B.4) s'étendant le long du bord libre (13A ; 113A.1) de la cloison d'obstruction (13 ; 113).

2. Véhicule automobile (1) selon la revendication 1, **caractérisé en ce que** le bord libre (13A ; 113A.1) de la cloison d'obstruction (13 ; 113) est à une distance de la façade (5 ; 105) supérieure à 10mm et/ou inférieure à 40mm.

3. Véhicule automobile (1) selon l'une des revendications 1 et 2, **caractérisé en ce que** la cloison d'obstruction (13 ; 113), y compris le bord libre (13A ; 113A.1), est en matériau plastique rigide par rapport à un matériau élastomère.

4. Véhicule automobile (1) selon l'une des revendications 1 à 3, **caractérisé en ce que** la cloison d'obstruction (13) s'étend verticalement depuis la paroi (11) du déflecteur (9) de pare-chocs avant (3).

5. Véhicule automobile (1) selon la revendication 4, **caractérisé en ce que** la paroi (11) du déflecteur (9) de pare-chocs avant (3) présente un profil longitudinal avec une partie en U renversé (11A) formant une portion de paroi supérieure (11A) et deux portions de paroi latérales (11B), la cloison d'obstruction (13) s'étendant depuis la portion de paroi supérieure (11A).

6. Véhicule automobile selon l'une des revendications 1 à 3, **caractérisé en ce que** la cloison d'obstruction (113) s'étend depuis un bord avant (111A) de la paroi (111) du déflecteur (109) de pare-chocs avant (103).

7. Véhicule automobile selon la revendication 6, **caractérisé en ce que** la cloison d'obstruction (113) est fixée à la paroi (111) du déflecteur (109) de pare-chocs avant (103) au niveau d'une fixation (111B) de ladite paroi (111) au bord inférieur (103C) dudit pare-chocs (103).

8. Véhicule automobile selon l'une des revendications 6 et 7, **caractérisé en ce que** la cloison d'obstruction (113) présente un profil en équerre par une première portion de cloison majoritairement verticale (113B) adjacente au bord avant (111A) de la paroi (111) du déflecteur (109) de pare-chocs avant (103) et une deuxième portion de cloison majoritairement horizontale (113A) et formant le bord libre (113A.1).

9. Véhicule automobile selon l'une des revendications 6 à 8, **caractérisé en ce que** le bord libre (113A.1) de la cloison d'obstruction (113) est adjacent à un bord inférieur et avant (105B.5) de la façade avant (105).

## Patentansprüche

1. Kraftfahrzeug (1) mit:
- eine vordere Fassade (5; 105) mit einem Wärmetauscher (5A; 105A);
- einen vorderen Stoßfänger (3; 103) und
- ein Abweiser (9; 109) eines vorderen Stoßfängers (3; 103) mit einer Wand (11; 111), die sich von einem unteren Rand (3C; 103C) des vorderen Stoßfängers (3; 103) unter und von der vorderen Fassade (5; 105) entfernt erstreckt und einen Durchgang (7; 107) zwischen der Wand (11; 111) und der Fassade (5; 105) bildet; und
- eine Verschlusswand (13; 113), die so gestaltet ist, dass sie den Durchgang (7; 107) verdeckt;
Verschlusswand (13; 113), die sich von der Wand (11; 111) der vorderen Stoßfängerablenkplatte (9; 109) zur vorderen Fassade (5; 105) hin zu einem freien Rand (13A; 113A.1) der Wand (13; 113) erstreckt, der von der Fassade (5; 105) beabstandet ist, **dadurch gekennzeichnet, dass** die vordere Fassade (5; 105) eine Fläche umfasst Die Unterseite (5B.3; 105B.3) der Wand (11; 111) der vorderen Stoßstange (3; 103) gegenüberliegend, wobei die Fläche (5B.3; 105B.3) wenigstens eine Querrippe (5B.4; 105B.4) aufweist, die sich entlang der freien Kante (13A; 113A.1) der Verschlusswand (13; 113) erstreckt.

2. Kraftfahrzeug (1) nach Anspruch 1, **dadurch gekennzeichnet, dass** der freie Rand (13A; 113A.1) der Verschlusswand (13; 113) einen Abstand von der Fassade (5; 105) von mehr als 10 mm und/oder weniger als 40 mm aufweist.

3. Kraftfahrzeug (1) nach einem der Ansprüche 1 und 2, **dadurch gekennzeichnet, dass** die Verschlusswand (13; 113) einschließlich des freien Randes (13A; 113A.1) aus einem gegenüber einem elastomeren Material steifen Kunststoff besteht.

4. Kraftfahrzeug (1) nach einem der Ansprüche 1 bis 3, **dadurch gekennzeichnet, dass** sich die Verschlusswand (13) vertikal von der Wand (11) des vorderen Stoßfängerabweisers (9) (3) erstreckt.

5. Kraftfahrzeug (1) nach Anspruch 4, **dadurch gekennzeichnet, dass** die Wand (11) des vorderen Stoßfängerabweisers (9) (3) ein Längsprofil aufweist Mit einem umgekehrten U-förmigen Teil (11A), das einen oberen Wandabschnitt (11A) und zwei Seitenwandabschnitte (11B) bildet, erstreckt sich die Verschlusswand (13) von dem oberen Wandabschnitt (11A).

6. Kraftfahrzeug nach einem der Ansprüche 1 bis 3, **dadurch gekennzeichnet, dass** sich die Verschlusswand (113) von einem vorderen Rand (111A) der Wand (111) des Abweisers (109) der vorderen Stoßstange (103) aus erstreckt.

7. Kraftfahrzeug nach Anspruch 6, **dadurch gekennzeichnet, dass** die Verschlusswand (113) an der Wand (111) des Deflektors (109) des vorderen Stoßfängers (103) an einer Befestigung (111B) der Wand (111) an der Unterkante (103C) des Stoßfängers (103) befestigt ist.

8. Kraftfahrzeug nach einem der Ansprüche 6 und 7, **dadurch gekennzeichnet, dass** die Verschlusswand (113) ein Winkelprofil durch einen ersten überwiegend vertikalen Wandabschnitt (113B) neben der Vorderkante (111A) der Wand (111) des vorderen Stoßfängerabweisers (109) (103) und einen zweiten überwiegend horizontalen Wandabschnitt (113A) aufweist, der die freie Kante (113A.1) bildet.

9. Kraftfahrzeug nach einem der Ansprüche 6 bis 8, **dadurch gekennzeichnet, dass** der freie Rand (113A.1) der Verschlusswand (113) an einen unteren und vorderen Rand (105B.5) der vorderen Fassade (105) angrenzt.

## Claims

1. Motor vehicle (1) comprising:
- a front panel (5; 105) with a heat exchanger (5A; 105A);
- a front bumper (3; 103); and
- a front bumper deflector (9; 109) (3; 103), with a wall (11; 111) extending from a lower edge (3C; 103C) of the front bumper (3; 103) to below, and at a distance from the front facade (5; 105), forming a passage (7; 107) between said wall (11; 111) and said facade (5; 105); and
- an obstructing bulkhead (13; 113), configured to obstruct the passage (7; 107);
the obstructing partition (13; 113) extending from the wall (11; 111) of the deflector (9; 109) of the front bumper (3; 103) towards the front facade (5; 105) as far as a free edge (13A; 113A.1) of said partition (13; 113) situated at a distance from said facade (5; 105), **characterised in that** the front facade (5; 105) comprises a lower face (5B.3; 105B.3) facing the wall (11; 111) of the deflector (9; 109) of the front bumper (3; 103), said face (5B.3; 105B.3) comprising at least one transverse rib (5B.4; 105B.4) extending along the free edge (13A; 113A.1) of the obstructing partition (13; 113).

2. Motor vehicle (1) according to claim 1, **characterised in that** the free edge (13A; 113A.1) of the obstructing partition (13; 113) is at a distance from the facade (5; 105) greater than 10 mm and/or less than 40 mm.

3. Motor vehicle (1) according to either of Claims 1 and 2, **characterised in that** the obstructing partition (13; 113), including the free edge (13A; 113A.1), is made of a rigid plastic material by report with an elastomeric material.

4. Motor vehicle (1) according to one of claims 1 to 3, **characterised in that** the obstructing partition (13) extends vertically from the wall (11) of the front bumper deflector (9) (3).

5. Motor vehicle (1) according to claim 4, wherein the wall (11) of the front bumper deflector (9) (3) has a longitudinal profile with an inverted U-shaped part (11A) forming an upper wall portion (11A) and two side wall portions (11B), the obstructing partition (13) extending from the upper wall portion (11A).

6. Motor vehicle according to one of Claims 1 to 3, **characterised in that** the obstructing partition (113) extends from a front edge (111A) of the wall (111) of the deflector (109) of the front bumper (103).

7. Motor vehicle according to claim 6, wherein the obstructing partition (113) is fixed to the wall (111) of the deflector (109) of the front bumper (103) in level of a fixing (111B) of said wall (111) to the lower edge (103C) of said bumper (103).

8. Motor vehicle according to either of Claims 6 and 7, **characterised in that** the obstructing partition (113) has a profile at right angles by a first mostly vertical partition portion (113B) adjacent to the front edge (111A) of the wall (111) of the front bumper deflector (109) (103) and a second mostly horizontal partition portion (113A) and forming the free edge (113A.1).

9. Motor vehicle according to one of Claims 6 to 8, **characterised in that** the free edge (113A.1) of the obstructing partition (113) is adjacent to a lower and front edge (105B.5) of the front façade (105).
